# FASCICULE DE BREVET EUROPEEN

(11) **EP 3 701 314 B1**
(45) Date de publication et mention de la délivrance du brevet: **08.09.2021**
(21) Numéro de dépôt: 18803326.0
(22) Date de dépôt: 24.10.2018
(51) Int. Cl.: G02B 27/01

(54) **AFFICHEUR TÊTE HAUTE**
HEAD-UP-ANZEIGE
HEAD-UP DISPLAY

(30) Priorité: 24.10.2017 FR 1760034
(43) Date de publication de la demande: 02.09.2020
(73) Titulaire: Valeo Comfort and Driving Assistance, 94046 Créteil Cedex (FR)
(72) Inventeur: MERMILLOD, Pierre, 94046 Créteil Cedex (FR); GRANDCLERC, Francois, 94046 Créteil Cedex (FR); GACHE, Stephane, 94046 Créteil Cedex (FR)
(74) Mandataire: Delplanque, Arnaud
(86) Numéro de dépôt international: PCT/EP2018/079207
(87) Numéro de publication internationale: WO 2019/081603

(56) Documents cités:
- EP-A1- 3 035 105
- EP-A1- 3 048 468
- WO-A1-2015/011354
- WO-A1-2017/017160

## Description

### DOMAINE TECHNIQUE AUQUEL SE RAPPORTE L'INVENTION

La présente invention concerne un afficheur tête haute.

Elle concerne plus particulièrement un afficheur comprenant :
- une unité de génération d'image comportant un écran duquel émerge un faisceau lumineux, l'écran étant adapté pour générer une image à afficher, et
- un système optique de projection, adapté pour projeter le faisceau lumineux sortant de l'écran vers une lame partiellement transparente de manière à former, par réflexion par ladite lame, une image virtuelle de l'écran, l'image virtuelle étant visible avec une luminosité maximale depuis un point d'observation.

Elle s'applique de manière particulièrement intéressante dans un véhicule tel qu'un véhicule automobile.

### ARRIERE-PLAN TECHNOLOGIQUE

Pour le conducteur d'un véhicule automobile, il est particulièrement confortable de pouvoir visualiser des informations relatives au fonctionnement du véhicule, relatives à une voie de circulation faisant face au véhicule, ou autres, sans avoir pour cela à détourner son regard de cette voie de circulation.

Il est connu dans ce but d'équiper le véhicule avec un afficheur dit tête haute, tel que décrit ci-dessus, la lame partiellement transparente étant située devant le conducteur, par exemple sous la forme d'un combineur disposé entre le pare-brise du véhicule et les yeux du conducteur. L'image virtuelle, comportant les informations à afficher, se superpose alors visuellement à l'environnement faisant face au véhicule.

Pour que le conducteur puisse effectivement visualiser cette image virtuelle, ses yeux doivent être situés dans une zone de l'espace appelée boite à œil (ou « eyebox », en anglais), atteinte, en sortie de l'afficheur, par une partie du faisceau lumineux émis par l'unité de génération d'image (pour cela, les yeux du conducteur peuvent par exemple être situés au niveau de la pupille de sortie de l'afficheur). Le point d'observation mentionné ci-dessus, depuis lequel l'image virtuelle est visible avec une luminosité maximale, est situé dans la boite à oeil, par exemple au centre de celle-ci.

Pour permettre au conducteur de visualiser une telle image virtuelle pour différentes positions de ses yeux, il est connu monter le combineur mobile en rotation par rapport à l'afficheur, autour d'un axe horizontal. Une rotation du combineur autour de cet axe permet de déplacer la boite à œil pour adapter sa position à celle des yeux du conducteur.

Mais cette rotation du combineur entraine un déplacement de la position de l'image virtuelle par rapport à l'espace faisant face au conducteur.

De la même manière, lorsque la lame partiellement transparente est réalisée au moyen du pare-brise du véhicule, il est connu de faire pivoter un miroir de l'afficheur (disposé sur le trajet des rayons lumineux entre l'écran et le pare-brise) autour d'un axe horizontal, pour déplacer la boite à œil afin d'adapter sa position à celle des yeux du conducteur. Mais cette rotation du miroir entraîne là encore un déplacement de la position de l'image virtuelle par rapport à l'espace faisant face au conducteur.

### OBJET DE L'INVENTION

Dans ce contexte, la présente invention propose un afficheur tête haute tel que défini en introduction, comprenant en outre :
- des moyens de réglage pour modifier une direction présentée par le faisceau lumineux en sortie de l'écran, et
- un système de compensation, configuré pour, lors d'une modification de la direction présentée par le faisceau lumineux en sortie de l'écran, maintenir alignés :
   - ledit point d'observation,
   - un point donné de l'image virtuelle, et
   - un point fixe par rapport à l'afficheur, situé d'un côté opposé audit point d'observation par rapport à l'image virtuelle.

Le point d'observation précité, depuis lequel l'image virtuelle est visible avec une luminosité maximale, est situé à l'opposé de l'image virtuelle, par rapport à la lame semi-transparente. Ce point d'observation correspond par exemple au point de l'espace où la lumière (le faisceau lumineux) issue de l'afficheur présente une puissance lumineuse par unité de surface maximale. C'est donc lorsqu'un utilisateur place l'un de ses yeux au point d'observation en question que l'image virtuelle lui parait la plus lumineuse.

Modifier la direction du faisceau lumineux sortant de l'écran déplace ce point d'observation.

Les moyens de réglage permettent donc d'adapter la position du point d'observation à la position des yeux d'un utilisateur du véhicule, c'est-à-dire qu'ils permettent d'amener ce point d'observation en vis-à-vis de l'un des yeux de l'utilisateur pour que cet utilisateur puisse visualiser l'image virtuelle avec une luminosité maximale.

Lors du déplacement du point d'observation, grâce au système de compensation précité, le point donné de l'image virtuelle mentionné ci-dessus reste, vu depuis le point d'observation, superposé au même point, fixe, de l'espace situé en avant du l'afficheur (c'est-à-dire du côté de l'image virtuelle, par rapport à la lame).

Cette propriété permet, lors du déplacement du point d'observation, qu'une partie au moins de l'image virtuelle reste superposée visuellement à des éléments de l'environnement de l'afficheur situés au niveau de ce point fixe.

Cette disposition est particulièrement intéressante lorsque l'afficheur est configuré pour fonctionner dans un mode dit de réalité augmentée, dans lequel des éléments à afficher doivent se superposer à des éléments donnés de l'environnement de l'afficheur visualisés à travers ladite lame. De tels éléments à afficher peuvent par exemple comprendre une ligne lumineuse destinée à souligner ou matérialiser une bordure de voie de circulation, ou un symbole lumineux à superposer à un véhicule lent situé devant un véhicule équipé de l'afficheur tête haute.

D'autres caractéristiques non limitatives et avantageuses de l'afficheur conforme à l'invention, prises individuellement ou selon toutes les combinaisons techniquement possibles, sont les suivantes :
- le système de compensation comprend un module de pilotage de l'écran adapté pour piloter, en fonction de la direction présentée par le faisceau lumineux, un décalage, sur l'écran, de ladite image à afficher générée par cet écran ;
- le système optique de projection comprend au moins un miroir disposé sur le trajet dudit faisceau lumineux ;
- le système de compensation comprend un dispositif de déplacement dudit miroir, configuré pour déplacer ce miroir en fonction de la direction présentée par le faisceau lumineux ;
- ledit dispositif de déplacement est configuré pour déplacer ledit miroir en translation par rapport à l'écran, en fonction de la direction présentée par le faisceau lumineux ;
- l'unité de génération d'image comprend un dispositif de rétro-éclairage de l'écran ;
- lesdits moyens de réglage comprennent une liaison pivot autorisant une rotation du dispositif de rétro-éclairage par rapport à l'afficheur, autour d'un axe de rotation ;
- l'axe de rotation du dispositif de rétro-éclairage s'étend parallèlement à l'écran ;
- l'axe de rotation du dispositif de rétro-éclairage s'étend dans le plan de l'écran ;
- l'écran est solidaire du dispositif de rétro-éclairage ;
- l'écran est fixe par rapport à l'afficheur ;
- le système de compensation est configuré pour que, lorsque l'afficheur est installé dans un véhicule automobile donné situé sur une voie de circulation plane, ledit point fixe soit situé sur ladite voie de circulation ;
- ledit point donné de l'image virtuelle est situé à une extrémité inférieure de l'image virtuelle.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un véhicule équipé d'un afficheur tête haute mettant en œuvre les enseignements de l'invention, ainsi qu'une image virtuelle produite par cet afficheur pour un premier réglage de l'afficheur ;
- la figure 2 représente schématiquement le véhicule de la figure 1, ainsi que l'image virtuelle produite par son afficheur pour un deuxième réglage de cet afficheur ;
- la figure 3 représente schématiquement, plus en détail, l'afficheur de la figure 1 ;
- la figure 4 représente schématiquement un écran de l'afficheur de la figure 1 ; et
- la figure 5 représente schématiquement un autre mode de réalisation d'un tel afficheur.

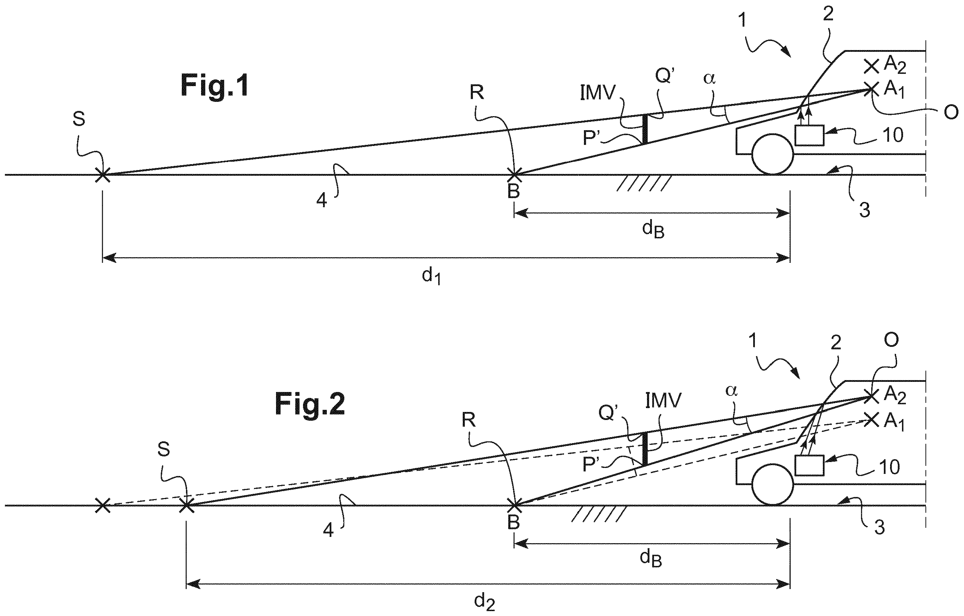

La figure 1 représente schématiquement, de coté, un véhicule 1 automobile, situé sur une voie de circulation 3, en l'occurrence plane. Le véhicule 1 est équipé d'un afficheur tête haute.

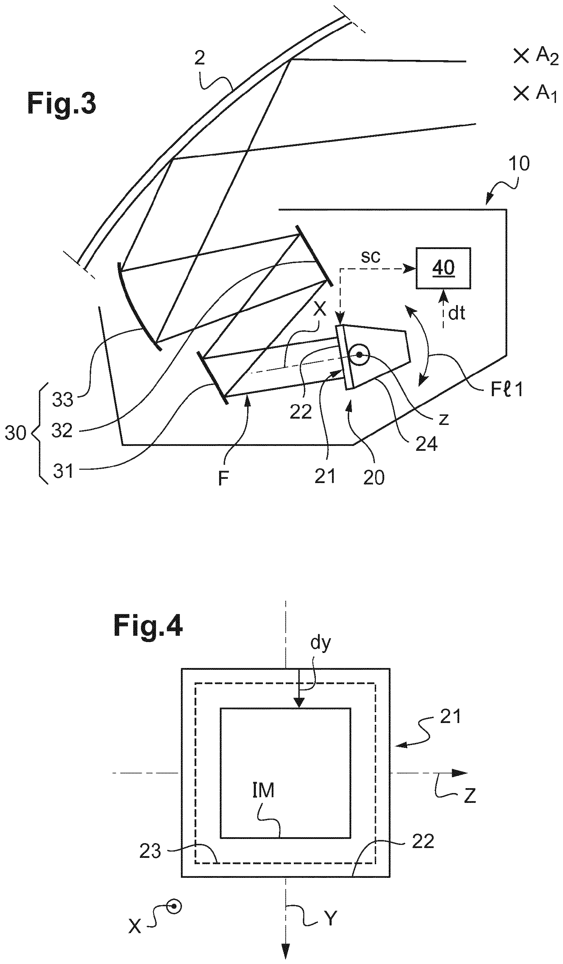

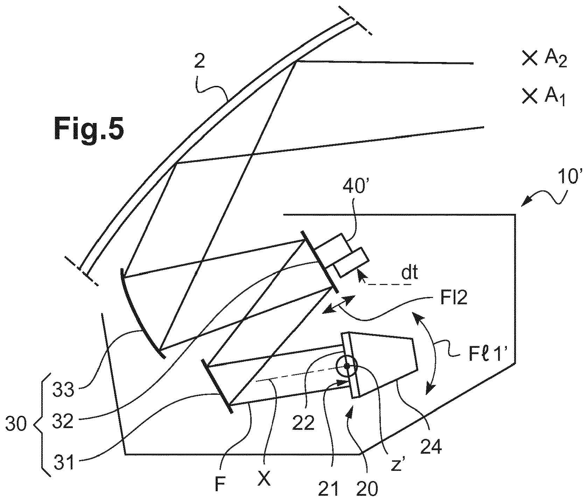

Deux modes de réalisation d'un tel afficheur 10 ; 10', pouvant l'un comme l'autre équiper ce véhicule 1 automobile, sont décrits ici, en référence respectivement aux figures 3 et 5.

Les principales différences entre ces deux modes de réalisation concernent la structure d'un système de compensation que comprend l'afficheur, qui sera décrite plus bas.

Les éléments identiques ou correspondant de ces deux modes de réalisation seront autant que possible identifiés par les mêmes signes de références, et ne seront pas décrits à chaque fois.

Quel que soit le mode de réalisation considéré, l'afficheur 10 ; 10' comprend une unité de génération d'image 20 (figures 3 et 5) qui comporte un écran 21, adapté pour générer une image à afficher IM (figure 4).

Cet écran 21 peut, comme ici, être réalisé au moyen d'un écran à cristaux liquides.

L'unité de génération d'image 20 comprend alors un dispositif de rétro-éclairage 24 de l'écran 21. Le dispositif de rétro-éclairage 24 comprend une ou plusieurs sources de lumière, telles que des diodes électroluminescentes, et, ici, un réflecteur collectant la lumière émise par ces sources pour la diriger vers l'écran 21.

En variante, l'unité de génération d'image pourrait comprendre au moins une source émettant un faisceau laser, ainsi qu'un système de balayage (c'est-à-dire de déplacement) du faisceau laser, l'écran précité étant alors réalisé par exemple au moyen d'un écran diffusant. L'image à afficher est alors générée en balayant le faisceau laser sur une face de l'écran diffusant.

L'image à afficher IM est générée par l'écran 21 en fonction d'un signal de commande sc (figure 3). Elle est générée à l'intérieur d'une zone utile 23 de l'écran 21.

L'écran 21 présente, à l'opposé du dispositif de rétro-éclairage 24, une face de sortie 22 par laquelle sort un faisceau lumineux F.

L'afficheur 10 ; 10' comprend également un système optique de projection 30, adapté pour projeter le faisceau lumineux F sortant de l'écran 21 vers une lame 2 partiellement transparente de manière à former, par réflexion par ladite lame, une image virtuelle IMV de l'écran (figures 1 et 2), l'image virtuelle étant visible avec une luminosité maximale depuis un point d'observation O.

La lame 2 partiellement transparente est formée ici par le pare-brise du véhicule (qui porte la référence 2 sur les figures).

Au lieu d'être formée par le pare-brise du véhicule, la lame partiellement transparente pourrait, en variante, être réalisée au moyen d'un composant optique dédié (on parle alors de combineur), disposé entre le pare-brise et la position habituellement occupée par la tête de l'utilisateur.

Le point d'observation O, depuis lequel l'image virtuelle IMV est visible avec une luminosité maximale, est situé à l'opposé de l'image virtuelle IMV par rapport à la lame 2 semi-transparente. Ce point d'observation O correspond ici au point de l'espace où la lumière (le faisceau lumineux F) issue de l'afficheur 10 ; 10' présente une puissance lumineuse par unité de surface maximale. Ce point d'observation est généralement situé sur le rayon principal (ou « chief ray » en anglais) sur lequel est centré le faisceau de lumineux issu de l'afficheur. Le point d'observation O est par exemple situé au centre de la pupille de sortie de l'afficheur (qui est ici le centre de la boîte à œil).

Tel que représenté sur les figures, le système optique de projection 30 comprend un premier, un deuxième et un troisième miroirs 31, 32, 33, disposés chacun sur le trajet du faisceau lumineux F.

Ces miroirs 31, 32, 33 permettent de replier le trajet, suivi par le faisceau lumineux F entre l'unité de génération d'image 20 et la lame 2. La distance séparant, le long de ce trajet, l'unité de génération d'image 20 et la lame 2, s'en trouve augmentée, tout en conservant un volume réduit pour l'afficheur 2.

Le troisième miroir 33 réfléchit le faisceau lumineux F vers la lame 2. Ce troisième miroir 33 est convergent de manière, après réflexion par la lame 2, à former l'image virtuelle IMV à une distance donnée en avant de l'afficheur (à une distance donnée de la lame, du côté de la lame opposé à l'utilisateur). Cette distance peut par exemple être comprise entre 1 mètre et 15 mètres. Ici, elle est plus précisément comprise entre 5 et 15 mètres, et peut éventuellement être ajustée en fonction de l'environnement, urbain ou autoroutier, dans lequel circule le véhicule (de manière à être comprise entre 5 et 10 mètres en milieu urbain, et entre 10 et 15 mètres sur autoroute).

De manière optionnelle, un ou plusieurs des miroirs 31, 32, 33 peuvent être conformés de manière à compenser des distorsions ou aberrations optiques qui pourraient être causées par la réflexion sur la lame 2.

En variante, le système optique de projection pourrait comprendre un nombre différent de miroirs et un ou plusieurs autres composants optiques disposés sur le trajet du faisceau lumineux, tels qu'une fenêtre de protection, par exemple. Il est noté toutefois que, dans le deuxième mode de réalisation de l'afficheur, le système optique de projection comprend au moins un miroir.

De manière remarquable, l'afficheur 10 ; 10' comprend des moyens de réglage pour modifier une direction X présentée par le faisceau lumineux F en sortie de l'écran 21. Cette direction X correspond ici à la direction de propagation moyenne présentée par le faisceau lumineux F immédiatement en sortie de l'écran 21.

Modifier la direction X du faisceau lumineux F sortant de l'écran 21 déplace le point d'observation O mentionné ci-dessus.

Ainsi, le point d'observation O est mobile par rapport à l'afficheur 10 ; 10', les moyens de réglage étant adaptés pour modifier la direction X présentée par le faisceau lumineux F, de manière à déplacer ce point d'observation O par rapport à l'afficheur.

Grâce aux moyens de réglage, le point d'observation O peut alors être amené en vis-à-vis de l'un des yeux d'un utilisateur de l'afficheur 10 ; 10'.

Les figures 1 et 2 illustrent ce mécanisme. La direction X du faisceau lumineux F est différente dans le cas de la figure 2, par rapport au cas de la figure 1. En conséquence, dans le cas de la figure 1, le point d'observation O est situé à une première position cible A₁, tandis que dans le cas de la dans le cas de la figure 2, il est situé à une deuxième position cible A₂.

La première position cible A₁ correspond à la position la plus basse que peut occuper le point d'observation O dans le véhicule 1 (lorsque l'afficheur 10 ; 10' est installé dans le véhicule 1). La deuxième position cible A₂ correspond quant à elle la position la plus haute que peut occuper le point d'observation O.

Les moyens de réglage autorisent une rotation de la direction X du faisceau lumineux F, avec une amplitude de rotation supérieure, ici, à 4 degrés. Cette amplitude de rotation permet, en sortie de l'afficheur, de déplacer le point d'observation O sur une distance supérieure à 6 centimètres (c'est-à-dire que la distance entre les premier et deuxième points cibles A₁ et A₂ est alors supérieure à 6 centimètres). Cette amplitude de déplacement s'avère généralement suffisante pour amener le point d'observation O en vis-à-vis de l'un des yeux de l'utilisateur, et cela pour des utilisateurs de tailles différentes, ou pour différents réglages de hauteur du siège sur lequel est assis l'utilisateur.

Dans les modes de réalisation décrits ici, les moyens de réglage précités comprennent une liaison pivot autorisant une rotation du dispositif de rétro-éclairage 24 par rapport à l'afficheur 10 ; 10', autour d'un axe de rotation z ; z'. Le dispositif de rétro-éclairage 24 est mobile par rapport à l'afficheur 10 ; 10' en ce sens qu'il est monté mobile par rapport à un élément fixe de la structure de l'afficheur, tel qu'un châssis ou un boîtier de l'afficheur.

L'axe de rotation z ; z' du dispositif de rétro-éclairage 24 s'étend parallèlement à l'écran 21.

L'écran 21 et le dispositif de rétro-éclairage 24 sont ici solidaires l'un de l'autre, si bien que l'unité de génération d'image 20 pivote en bloc autour de l'axe de rotation z ; z' précité. Le mouvement de rotation correspondant est symbolisé schématiquement par la flèche FI1 sur la figure 3, et par la flèche FI1' sur la figure 5.

En variante, on pourrait toutefois prévoir que l'écran reste fixe par rapport à l'afficheur, tandis que le dispositif de rétro-éclairage pivote autour de son axe de rotation.

Les moyens de réglage comprennent également un actionneur (non représenté) pour entrainer le dispositif de rétro-éclairage 24 en rotation autour de son axe z ; z'. Cet actionneur peut être réalisé par exemple au moyen d'un moteur électrique, ou d'une manette actionnable manuellement depuis l'extérieur de l'afficheur 10 ; 10'.

Dans d'autres modes de réalisation, les moyens de réglage de l'afficheur pourraient être réalisés autrement que par une rotation du dispositif de rétro-éclairage, par exemple au moyen d'un composant optique mobile disposé dans l'unité de génération d'image.

L'image virtuelle IMV produite par l'afficheur 10 ; 10' s'étend entre une extrémité inférieure et une extrémité supérieure. Un point P' de l'image virtuelle IMV, représenté sur les figures 1 et 2, est situé à son extrémité inférieure, tandis qu'un point Q' de cette image est situé à son extrémité supérieure. Lorsque l'afficheur 10 ; 10' est installé dans le véhicule 1 automobile, l'extrémité inférieure de l'image virtuelle IMV est située du côté de la voie de circulation 3 (du côté du sol).

Vue depuis le point d'observation O, l'image virtuelle IMV se superpose visuellement à une partie 4 de la voie de circulation 3.

Cette partie 4 de la voie de circulation s'étend entre :
- un premier point d'intersection R, à l'intersection entre la voie de circulation 3, et une droite reliant le point d'observation O à l'extrémité inférieure de l'image virtuelle IMV, et
- un deuxième point d'intersection S, à l'intersection entre la voie de circulation 3, et une droite reliant le point d'observation O à l'extrémité supérieure de l'image virtuelle IMV.

Ainsi, d'un point de vue visuel, vue depuis le point d'observation O, l'image virtuelle IMV parait s'étendre du premier point d'intersection R au deuxième point d'intersection S.

En l'absence de disposition particulière, les points d'intersection R et S mentionnés ci-dessus se déplaceraient le long de la voie de circulation 3 lors d'un déplacement du point d'observation O.

Pour remédier, entre autres, à ce problème, l'afficheur 10 ; 10' comprend un système de compensation 40 ; 40', configuré pour, lors d'une modification de la direction X présentée par le faisceau lumineux F en sortie de l'écran 21, maintenir alignés :
- ledit point d'observation O,
- un point donné de l'image virtuelle IMV, et
- un point fixe B, fixe par rapport à l'afficheur 10 ; 10', situé d'un côté opposé audit point d'observation O par rapport à l'image virtuelle IMV.

Ainsi, grâce au système de compensation 40 ; 40', le point donné de l'image virtuelle IMV reste, vu depuis le point d'observation O, superposé au même point fixe B de l'espace situé en avant du l'afficheur 10 ; 10'.

Cette propriété permet, lors du déplacement du point d'observation O, qu'une partie au moins de l'image virtuelle IMV reste superposée visuellement à des éléments de l'environnement de l'afficheur 10 ; 10' situés au niveau de ce point fixe B.

Cette disposition est particulièrement intéressante lorsque, comme ici, l'afficheur est configuré pour fonctionner dans un mode de réalité augmentée, dans lequel des éléments de l'image virtuelle IMV doivent se superposer à des éléments donnés de l'environnement de l'afficheur visualisés à travers la lame 2.

Dans les deux modes de réalisation décrits ici, le système de compensation 40 ; 40' est configuré pour que, lorsque l'afficheur 10 ; 10' est installé dans le véhicule 1 automobile, ledit point fixe B soit situé sur la voie de circulation 3.

Cette disposition est intéressante car les éléments de l'environnement pour lesquels il est souhaitable de maintenir une superposition visuelle avec l'image virtuelle IMV sont le plus souvent situés sur une telle voie de circulation.

Le point fixe B est situé plus précisément à une distance d_{B} en avant de l'afficheur. En pratique, la distance d_{B} est supérieure à 5 mètres. Elle peut par exemple, comme ici, être égale à 20 mètres.

Par ailleurs, dans les deux modes de réalisation décrits ici, le point donné de l'image virtuelle IMV, maintenu aligné avec le point d'observation O et avec le point fixe B, est situé à l'extrémité inférieure de l'image virtuelle IMV. Il s'agit plus précisément du point P' mentionné ci-dessus.

En conséquence, grâce au système de compensation 40 ; 40', le premier point d'intersection R reste à une distance constante en avant de l'afficheur 10 ; 10', égale en l'occurrence à la distance d_{B}.

La partie 4 de la voie de circulation 3 à laquelle se superpose l'image virtuelle IMV s'étend ainsi, en avant de l'afficheur 10 ; 10', à partir de la distance d_{B}, maintenue fixe même lors d'un déplacement du point d'observation O.

Il est avantageux que la superposition visuelle entre la voie de circulation 3 et l'image virtuelle soit maintenue ainsi pour les points de la partie 4 de cette voie de circulation les plus proches de l'afficheur 10 ; 10', car c'est pour les éléments de l'environnement proches du véhicule 1, plus encore que pour ceux éloignés du véhicule, qu'il est intéressant de maintenir une superposition visuelle avec l'image virtuelle IMV.

Pour ce qui est du deuxième point d'intersection S, il peut éventuellement se déplacer légèrement le long de la voie de circulation 3 lors d'un déplacement du point d'observation O.

Pour les deux modes de réalisation de l'afficheur 10 ; 10' décrits ici, par exemple, l'angle α sous lequel l'image virtuelle IMV est vue depuis le point d'observation O (angle formé entre la droite OQ' et la droite OP') est sensiblement constant lors d'un déplacement du point d'observation O. En conséquence, le deuxième point d'intersection S se déplace légèrement lors d'un déplacement du point d'observation O : il est plus proche de l'afficheur 10 ; 10' lorsque le point d'observation O est situé à la deuxième position cible A₂, la plus haute (figure 2), que lorsque le point d'observation O est situé à la première position cible A₁ (figure 1).

Le champ de vision de l'afficheur 10 ; 10' est toutefois suffisamment large (c'est-à-dire que l'angle α est suffisamment grand) pour que, lorsque le point d'observation O est situé à la deuxième position cible A₂, la distance d₂ entre l'afficheur 10 ; 10' et le deuxième point d'intersection S soit supérieure à une limite donnée, par exemple supérieure à 70 mètres.

Ici, la distance d₂ est plus précisément égale à 80 mètres. Quant à la distance di, qui sépare l'afficheur 10 ; 10' du deuxième point d'intersection S lorsque le point d'observation est situé à la première position cible A₁ (la plus basse), elle est ici égale à 83 mètres environ. Ainsi, vue depuis le point d'observation O, l'image virtuelle IMV parait s'étendre, sur la voie de circulation 3, depuis 20 mètres en avant de l'afficheur (cette première distance, d_{B}, restant fixe), jusqu'à au moins 80 mètres.

Sur la figure 2, la position occupée par l'image virtuelle IMV est représentée en trait plein. A titre de comparaison, la position qu'occupe l'image virtuelle, pour le réglage de l'afficheur correspondant à la figure 1, est aussi représentée sur la figure 2, en pointillés. Comme illustré par cet exemple, pour l'afficheur 10 ; 10' mettant en œuvre les enseignements de l'invention, déplacer le point d'observation O, tout en maintenant l'alignement précité, peut entraîner un déplacement de l'image virtuelle IMV par rapport à l'afficheur. De manière comparable, il est noté qu'une direction de plongée, dirigée du point d'observation O au point P' de l'image virtuelle IMV, est ici susceptible de changer lors d'un déplacement du point d'observation O.

La structure du système de compensation 40 ; 40', différente pour le premier mode de réalisation et pour le deuxième mode de réalisation, peut maintenant être décrite.

Dans le premier mode de réalisation de l'afficheur 10 (figure 3), le système de compensation 40 est réalisé au moyen d'un module de pilotage de l'écran 21 adapté pour piloter, en fonction de la direction X présentée par le faisceau lumineux F, un décalage dy, sur l'écran 21, de l'image à afficher IM (figure 4).

La position de l'image virtuelle IMV par rapport à l'afficheur 10 ; 10' dépend directement de la position, sur l'écran 21, de l'image à afficher IM (puisque ces deux images sont conjuguées l'une de l'autre par le système optique de projection 30 et la lame 2).

Le module de pilotage est donc programmé, pour, en fonction de la direction X présentée par le faisceau lumineux F en sortie de l'écran, c'est-à-dire en fonction de la position du point d'observation O, décaler l'image à afficher IM pour aligner l'extrémité inférieure de l'image virtuelle IMV avec le point fixe B et le point d'observation O. Le décalage dy est donc un décalage de l'image à afficher IM, dans le plan de l'écran 21. Ici, le décalage dy est plus précisément un décalage de cette image parallèlement à un axe y, l'axe y étant parallèle à l'écran 21 et perpendiculaire à l'axe de rotation z (figure 4). Le décalage dy repère la position de l'image à afficher IM le long de l'axe y. Le décalage dy peut par exemple être égal à une distance séparant une extrémité de l'image à afficher IM de l'un des côtés de l'écran (qui est ici rectangulaire), comme cela est représenté sur la figure 4.

Le fait que l'alignement précité soit maintenu en agissant sur le signal de commande sc de l'écran, sans avoir recours à des déplacements mécaniques supplémentaires, est particulièrement intéressant en termes de coût, de fiabilité et de temps de réponse du système de compensation.

On peut par exemple prévoir que le module de pilotage soit programmé pour :
- recevoir une donnée dt, représentative d'une position angulaire du dispositif de rétro-éclairage 24 autour de son axe de rotation z, produite par exemple par un capteur angulaire (non représenté),
- déterminer, en fonction de la donnée dt, une position (ici une valeur du décalage dy) de l'écran 21 au niveau de laquelle l'image à afficher IM doit être générée pour que l'extrémité inférieure de l'image virtuelle IMV soit alignée avec le point fixe B et le point d'observation O,
- piloter l'écran 21, par l'intermédiaire du signal de commande sc, de manière que l'image à afficher IM soit générée à la position précédemment déterminée.

La relation entre :
- la position de l'image à afficher IM sur l'écran 21, et
- la position angulaire du dispositif de rétro-éclairage 24 autour de son axe de rotation z
peut être déterminée lors d'une étape de calibration (alignement), préalable à la mise en service de l'afficheur. Cette relation peut être enregistrée dans une mémoire de l'afficheur, par exemple sous la forme d'une table de correspondance, pour être utilisée ensuite, une fois l'afficheur en service, lors de l'étape de détermination mentionnée ci-dessus.

Cette étape de calibration peut par exemple être réalisée en plaçant une cible sur le sol, à la distance d_{B} en avant du véhicule pour qu'un opérateur installé dans le véhicule puisse vérifier que l'extrémité inférieure de l'image virtuelle IMV est aligné avec le point fixe B (où est placé la cible). Pour cela, on peut prévoir que l'opérateur réalise les opérations suivantes, pour différents réglages de hauteur du siège conducteur (et donc pour différentes positions de ses yeux) :
- réglage de la position angulaire du dispositif de rétro-éclairage 24 autour de son axe de rotation z, de manière à maximiser la luminosité avec laquelle il perçoit l'image virtuelle (IMV), puis
- ce réglage étant réalisé, ajustement de la position de l'image à afficher sur l'écran de manière à ce que l'extrémité inférieure de l'image virtuelle IMV soit alignée avec le point fixe B (donc avec la cible), puis
- enregistrement de cette position angulaire du dispositif de rétro-éclairage 24, et de la position correspondante de l'image à afficher sur l'écran, ces deux valeurs étant associées l'une à l'autre dans la mémoire de l'afficheur. Dans ce premier mode de réalisation, l'image à afficher IM occupe une portion seulement de la zone utile 23 de l'écran 21 (figure 4), pour permettre, comme expliqué ci-dessus, de déplacer l'image image virtuelle IM dans le plan de l'écran 21.

Dans ce premier mode de réalisation, la position de l'axe de rotation z du dispositif de rétro-éclairage 24 est déterminée de manière à minimiser l'amplitude des déplacements de l'image à afficher IM nécessaires pour maintenir l'alignement précité. Cette procédure d'optimisation est réalisée au moyen de simulations optiques réalisées par ordinateur.

Pour l'exemple d'afficheur 10 représenté schématiquement sur la figure 3, cette position optimale de l'axe de rotation z du dispositif de rétro-éclairage 24 est située légèrement en arrière de la face de sortie 22 de l'écran (en arrière par rapport au sens de propagation du faisceau lumineux F), à une distance comprise entre 0,5 et 7 millimètres en arrière de cette face de sortie 22.

Dans un autre mode de réalisation non représenté, similaire au premier mode de réalisation, il est prévu en outre que le module de commande pilote l'écran de manière à dilater l'image à afficher générée par l'écran, en fonction de ladite direction du faisceau lumineux, afin de maintenir fixe par rapport à l'afficheur non seulement le premier point d'intersection, mais aussi le deuxième point d'intersection.

La superposition visuelle entre l'image virtuelle et la voie de circulation (ou les éléments présents sur celle-ci) est alors avantageusement maintenue pour toute la zone s'étendant du premier au deuxième point d'intersection, lors d'un déplacement du point d'observation.

Dans le deuxième mode de réalisation de l'afficheur 10' (figure 5), le système de compensation 40' est réalisé au moyen d'un dispositif de déplacement de l'un des miroirs du système optique de projection 30, en l'occurrence du deuxième miroir 32.

Le dispositif de déplacement est configuré pour déplacer le deuxième miroir 32, en fonction de la direction X présentée par le faisceau lumineux F en sortie de l'écran 21, de manière à maintenir l'extrémité inférieure de l'image virtuelle IMV alignée avec le point fixe B et le point d'observation O.

Le déplacement du deuxième miroir 32 adapté pour cela est déterminé au moyen de simulations optiques réalisées par ordinateur.

Ici, le dispositif de déplacement est configuré plus précisément pour déplacer le deuxième miroir 32 en translation, par rapport à l'écran 21, comme représenté schématiquement par la flèche FI2 de la figure 5.

Le dispositif de déplacement comprend alors, par exemple, une glissière, un organe d'actionnement, et une unité de commande de l'organe d'actionnement. Cette unité de commande est alors programmée pour :
- déterminer, en fonction de la donnée dt représentative de la position angulaire du dispositif de rétro-éclairage 24, une position à laquelle placer le deuxième miroir 32 pour maintenir l'alignement précité, et
- commander à l'organe d'actionnement de placer le deuxième miroir 32 à la position précédemment déterminée.

En variante, le déplacement du deuxième miroir pourrait être obtenu par un couplage mécanique entre le dispositif de rétro-éclairage et le miroir, réalisé par exemple au moyen d'une courroie et d'une crémaillère, permettant de lier leurs déplacements respectifs. Dans ce cas, l'organe d'actionnement et l'unité de commande précités sont alors omis.

Dans ce deuxième mode de réalisation, la position de l'axe de rotation z' du dispositif de rétro-éclairage 24 est choisie de manière à minimiser l'amplitude des déplacements du deuxième miroir 32 nécessaires pour maintenir l'alignement précité. Cette procédure d'optimisation est réalisée au moyen de simulations optiques réalisées par ordinateur.

En l'occurrence, pour l'exemple d'afficheur 10' représenté schématiquement sur la figure 5, positionner l'axe de rotation z' du dispositif de rétro-éclairage 24 dans le plan de l'écran 21 permet de minimiser l'amplitude des déplacements du deuxième miroir 32. L'amplitude de déplacement du deuxième miroir 32, nécessaire alors pour maintenir l'alignement précité lors d'un déplacement du point d'observation O depuis le premier A₁ jusqu'au deuxième point cible A₂, est alors d'environ 2 millimètres.

Dans une variante de ce deuxième mode réalisation, le miroir dont la position est ajustée par le système de compensation pourrait être le premier ou le troisième miroir, au lieu du deuxième miroir.

Il est aussi envisagé, en variante, de déplacer plusieurs miroirs du système optique de projection conjointement, pour maintenir l'alignement de l'image virtuelle avec le point fixe et le point d'observation. Cette disposition permet de réduire les amplitudes de déplacement respectives de chacun de ces miroirs. Elle permet également, par une combinaison appropriée des mouvements de ces miroirs, de maintenir constant le grandissement de l'afficheur (ici, la translation du deuxième miroir 32 modifie légèrement la longueur du trajet optique séparant l'écran 21 du troisième miroir 33 convergent, ce qui modifie donc légèrement le grandissement avec lequel l'image virtuelle IMV est formée ; cette variation du grandissement peut par exemple être supprimée, ou tout au moins réduite, grâce à un déplacement conjoint des deuxième et troisième miroirs).

En variante encore, le système de compensation pourrait être configuré pour déplacer l'un des miroirs du système optique de projection en rotation, au lieu de le déplacer en translation.

Enfin, dans d'autres modes de réalisation de l'afficheur tête haute, mettant en œuvre les enseignements de l'invention, on pourrait prévoir que le point fixe, servant de base avec aligner l'image virtuelle, soit situé ailleurs que sur une voie de circulation empruntée par le véhicule. Par ailleurs, le point donné de l'image virtuelle, maintenu aligné avec ce point fixe pourrait être situé ailleurs qu'à l'extrémité inférieure de l'image virtuelle. Ce point donné pourrait par exemple être situé au centre de l'image virtuelle.

D'autre part, il est également prévu un troisième mode de réalisation (non représenté), dans lequel le système de compensation de l'afficheur comprend l'unité de pilotage décrite précédemment, combinée au dispositif de déplacement du deuxième mode de réalisation. Combiner ainsi un déplacement de l'un des miroirs du système optique de projection avec un déplacement de l'image à afficher (dans le plan de l'écran) s'avère utile notamment lorsque l'image à afficher occupe une grande portion de la zone utile de l'écran (ce qui limite les possibilité de déplacement de l'image à afficher).

## Revendications

1. Afficheur (10 ; 10') tête haute comprenant :
- une unité de génération d'image (20) comportant un écran (21) duquel émerge un faisceau lumineux (F), l'écran (21) étant adapté pour générer une image à afficher (IM), et
- un système optique de projection (30), adapté pour projeter le faisceau lumineux (F) sortant de l'écran vers une lame (2) partiellement transparente de manière à former, par réflexion par ladite lame (2), une image virtuelle (IMV) de l'écran, l'image virtuelle étant visible avec une luminosité maximale depuis un point d'observation (O),
**caractérisé en ce qu'**il comprend en outre :
- des moyens de réglage pour modifier une direction (X) présentée par le faisceau lumineux (F) en sortie de l'écran (21), et
- un système de compensation (40 ; 40'), configuré pour, lors d'une modification de la direction (X) présentée par le faisceau lumineux (F) en sortie de l'écran (21), maintenir alignés :
- ledit point d'observation (O),
- un point (P') donné de l'image virtuelle (IMV), et
- un point fixe (B) par rapport à l'afficheur (10 ; 10'), situé d'un côté opposé audit point d'observation (O) par rapport à l'image virtuelle (IMV).

2. Afficheur (10) tête haute selon la revendication 1, dans lequel le système de compensation (40) comprend un module de pilotage de l'écran (21) adapté pour piloter, en fonction de la direction (X) présentée par le faisceau lumineux (F), un décalage (dy), sur l'écran (21), de ladite image à afficher (IM) générée par cet écran.

3. Afficheur (10') tête haute selon l'une des revendications 1 et 2, dans lequel le système optique de projection (30) comprend au moins un miroir (31, 32, 33) disposé sur le trajet dudit faisceau lumineux (F), et dans lequel le système de compensation (40') comprend un dispositif de déplacement dudit miroir (32), configuré pour déplacer ce miroir (32) en fonction de la direction (X) présentée par le faisceau lumineux (F).

4. Afficheur (10') tête haute selon la revendication 3, dans lequel ledit dispositif de déplacement est configuré pour déplacer ledit miroir (32) en translation par rapport à l'écran (21), en fonction de la direction (X) présentée par le faisceau lumineux (F).

5. Afficheur (10 ; 10') tête haute selon l'une des revendications 1 à 4, dans lequel l'unité de génération d'image (20) comprend un dispositif de rétro-éclairage (24) de l'écran (21), et dans lequel lesdits moyens de réglage comprennent une liaison pivot autorisant une rotation du dispositif de rétro-éclairage (24) par rapport à l'afficheur (10 ; 10'), autour d'un axe de rotation (z ; z').

6. Afficheur (10 ; 10') tête haute selon la revendication 5, dans lequel l'axe de rotation (z ; z') du dispositif de rétro-éclairage (24) s'étend parallèlement à l'écran (21).

7. Afficheur (10') tête haute selon la revendication 6, dans lequel l'axe de rotation (z') du dispositif de rétro-éclairage s'étend dans le plan de l'écran (21).

8. Afficheur (10 ; 10') tête haute selon l'une des revendications 5 à 7, dans lequel l'écran (21) est solidaire du dispositif de rétro-éclairage (24).

9. Afficheur (10 ; 10') tête haute selon l'une des revendications 1 à 8, dans lequel le système de compensation (40 ; 40') est configuré pour que, lorsque l'afficheur (10 ;10') est installé dans un véhicule (1) automobile donné situé sur une voie de circulation (3) plane, ledit point fixe (B) soit situé sur ladite voie de circulation (3).

10. Afficheur (10 ; 10') tête haute selon l'une des revendications 1 à 10, dans lequel ledit point (P') donné de l'image virtuelle (IMV) est situé à une extrémité inférieure de l'image virtuelle (IMV).

## Patentansprüche

1. Head-Up-Anzeige (10; 10'), die Folgendes beinhaltet:
- eine Bilderzeugungseinheit (20), die einen Schirm (21) umfasst, aus dem ein Lichtbündel (F) austritt, wobei der Schirm (21) dazu angepasst ist, ein anzuzeigendes Bild (IM) zu erzeugen, und
- ein optisches Projektionssystem (30), das dazu angepasst ist, das aus dem Schirm austretende Lichtbündel (F) zu einer teilweise transparenten Platte (2) zu projizieren, um durch Reflexion durch die Platte (2) ein virtuelles Bild (IMV) des Schirms zu bilden, wobei das virtuelle Bild von einem Beobachtungspunkt (0) aus mit einer maximalen Helligkeit sichtbar ist,
**dadurch gekennzeichnet, dass** sie ferner Folgendes beinhaltet:
- Einstellmittel, um eine Richtung (X), die das Lichtbündel (F) am Ausgang des Schirms (21) aufweist, zu ändern, und
- ein Ausgleichssystem (40; 40'), das dazu konfiguriert ist, bei einer Änderung der Richtung (X), die das Lichtbündel (F) am Ausgang des Schirms (21) aufweist, Folgendes ausgerichtet zu halten:
- den Beobachtungspunkt (0),
- einen gegebenen Punkt (P') des virtuellen Bildes (IMV) und
- einen mit Bezug auf die Anzeige (10; 10') festen Punkt (B), der sich mit Bezug auf das virtuelle Bild (IMV) auf einer entgegengesetzten Seite des Beobachtungspunkts (0) befindet.

2. Head-Up-Anzeige (10) nach Anspruch 1, wobei das Ausgleichssystem (40) ein Modul zur Ansteuerung des Schirms (21) beinhaltet, das dazu angepasst ist, eine Verschiebung (dy), auf dem Schirm (21), des anzuzeigenden Bildes (IM), das durch diesen Schirm erzeugt wird, in Abhängigkeit von der Richtung (X), die das Lichtbündel (F) aufweist, anzusteuern.

3. Head-Up-Anzeige (10') nach einem der Ansprüche 1 und 2, wobei das optische Projektionssystem (30) mindestens einen Spiegel (31, 32, 33) beinhaltet, der in dem Pfad des Lichtbündels (F) angeordnet ist, und wobei das Ausgleichssystem (40') eine Vorrichtung zur Verlagerung des Spiegels (32) beinhaltet, die dazu konfiguriert ist, diesen Spiegel (32) in Abhängigkeit von der Richtung (X), die das Lichtbündel (F) aufweist, zu verlagern.

4. Head-Up-Anzeige (10') nach Anspruch 3, wobei die Verlagerungsvorrichtung dazu konfiguriert ist, den Spiegel (32) in Abhängigkeit von der Richtung (X), die das Lichtbündel (F) aufweist, mit Bezug auf den Schirm (21) translatorisch zu verlagern.

5. Head-Up-Anzeige (10; 10') nach einem der Ansprüche 1 bis 4, wobei die Bilderzeugungseinheit (20) eine Vorrichtung zur Rückbeleuchtung (24) des Schirms (21) beinhaltet und wobei die Einstellmittel eine Schwenkverbindung beinhalten, die eine Rotation der Rückbeleuchtungsvorrichtung (24) mit Bezug auf die Anzeige (10; 10') um eine Rotationsachse (z; z') gestatten.

6. Head-Up-Anzeige (10; 10') nach Anspruch 5, wobei sich die Rotationsachse (z; z') der Rückbeleuchtungsvorrichtung (24) parallel zu dem Schirm (21) erstreckt.

7. Head-Up-Anzeige (10') nach Anspruch 6, wobei sich die Rotationsachse (z') der Rückbeleuchtungsvorrichtung in der Ebene des Schirms (21) erstreckt.

8. Head-Up-Anzeige (10; 10') nach einem der Ansprüche 5 bis 7, wobei der Schirm (21) fest mit der Rückbeleuchtungsvorrichtung (24) verbunden ist.

9. Head-Up-Anzeige (10; 10') nach einem der Ansprüche 1 bis 8, wobei das Ausgleichssystem (40; 40') dazu konfiguriert ist, dass, wenn die Anzeige (10; 10') in einem gegebenen Kraftfahrzeug (1) installiert ist, das sich auf einer ebenen Fahrbahn (3) befindet, sich der feste Punkt (B) auf der Fahrbahn (3) befindet.

10. Head-Up-Anzeige (10; 10') nach einem der Ansprüche 1 bis 10, wobei sich der gegebene Punkt (P') des virtuellen Bildes (IMV) an einem unteren Ende des virtuellen Bildes (IMV) befindet.

## Claims

1. Head-up display (10; 10') comprising:
- an image generation unit (20) including a screen (21) from which a light beam (F) emerges, the screen (21) being suitable for generating an image to be displayed (IM), and
- an optical projection system (30), suitable for projecting the light beam (F) exiting the screen toward a partially transparent plate (2) so as to form, by reflection by said plate (2), a virtual image (IMV) of the screen, the virtual image being visible with maximum brightness from an observation point (0),
**characterized in that** it further comprises:
- adjustment means for changing a direction (X) exhibited by the light beam (F) at the output of the screen (21), and
- a compensation system (40; 40') that is configured, when the direction (X) exhibited by the light beam (F) at the output of the screen (21) is changed, to keep the following aligned:
- said observation point (0),
- a given point (P') of the virtual image (IMV), and
- a point (B) that is fixed relative to the display (10; 10'), located on a side opposite said observation point (0) relative to the virtual image (IMV).

2. Head-up display (10) according to Claim 1, wherein the compensation system (40) comprises a screen (21) control module suitable for controlling, according to the direction (X) exhibited by the light beam (F), an offset (dy), on the screen (21), of said image to be displayed (IM) generated by this screen.

3. Head-up display (10') according to either of Claims 1 and 2, wherein the optical projection system (30) comprises at least one mirror (31, 32, 33) arranged in the path of said light beam (F), and wherein the compensation system (40') comprises a movement device for moving said mirror (32), which is configured to move this mirror (32) according to the direction (X) exhibited by the light beam (F).

4. Head-up display (10') according to Claim 3, wherein said movement device is configured to move said mirror (32) in translation relative to the screen (21), according to the direction (X) exhibited by the light beam (F).

5. Head-up display (10; 10') according to one of Claims 1 to 4, wherein the image generation unit (20) comprises a device for backlighting (24) the screen (21), and wherein said adjustment means comprise a pivot link allowing the backlighting device (24) to rotate relative to the display (10; 10'), about an axis of rotation (z; z').

6. Head-up display (10; 10') according to Claim 5, wherein the axis of rotation (z; z') of the backlighting device (24) runs parallel to the screen (21).

7. Head-up display (10') according to Claim 6, wherein the axis of rotation (z') of the backlighting device runs in the plane of the screen (21).

8. Head-up display (10; 10') according to one of Claims 5 to 7, wherein the screen (21) is integral with the backlighting device (24).

9. Head-up display (10; 10') according to one of Claims 1 to 8, wherein the compensation system (40; 40') is configured so that, when the display (10; 10') is installed in a given motor vehicle (1) located on a flat roadway (3), said fixed point (B) is located on said roadway (3).

10. Head-up display (10; 10') according to one of Claims 1 to 10, wherein said given point (P') of the virtual image (IMV) is located at a lower end of the virtual image (IMV).
